# EUROPÄISCHE PATENTSCHRIFT

(11) **EP 4 569 299 B1**
(45) Veröffentlichungstag und Bekanntmachung des Hinweises auf die Patenterteilung: **18.02.2026**
(21) Anmeldenummer: 24711474.7
(22) Anmeldetag: 07.03.2024
(51) Int. Cl.: G01C 21/36, G01C 21/00

(54) **VERFAHREN ZUR NAVIGATION EINES FAHRZEUGES BEI EINER GELÄNDEFAHRT**
METHOD FOR NAVIGATING A VEHICLE DURING AN OFF-ROAD JOURNEY
PROCÉDÉ DE NAVIGATION D'UN VÉHICULE PENDANT UN TRAJET TOUT-TERRAIN

(30) Priorität: 03.04.2023 DE 102023001314
(43) Veröffentlichungstag der Anmeldung: 18.06.2025
(73) Patentinhaber: Mercedes-Benz Group AG, 70372 Stuttgart (DE)
(72) Erfinder: KNEIP, Joerg, 8010 Graz (AT)
(74) Vertreter: Novagraaf Group
(86) Internationale Anmeldenummer: PCT/EP2024/056104
(87) Internationale Veröffentlichungsnummer: WO 2024/208533

(56) Entgegenhaltungen:
- EP-A1- 1 519 152
- DE-A1- 102020 004 551
- US-A1- 2010 332 116

## Beschreibung

Die Erfindung betrifft ein Verfahren zur Navigation eines Fahrzeuges bei einer Geländefahrt mittels augmentierter Darstellung, wobei bei einem Befahren eines Geländes zumindest anhand von erfassten satellitengestützten GEO-Positionsdaten des Fahrzeuges eine eine Mehrzahl von Wegpunkten umfassende Wegpunktstrecke in Bezug auf einen durch ein Fahrzeug zurückgelegten Streckenabschnitt erzeugt wird.

Aus der DE 10 2020 004 551 A1 ist ein Verfahren zur Bereitstellung von Daten und/oder Informationen für Geländefahrten eines Fahrzeuges, bei welchem die Umgebung des Fahrzeuges erfasst wird, bekannt. Zudem werden die Daten und/oder Informationen in einer augmentierten Darstellung mittels eines virtuellen, dem realen Fahrzeug vorausfahrenden Fahrzeuges im realen Fahrzeug angezeigt, indem das virtuelle Fahrzeug einer aktuellen Darstellung der Umgebung überlagert wird.

In der EP 1 519 152 A1 werden eine Vorrichtung und ein Verfahren zur Darstellung von Navigationshinweisen auf einer Projektionsfläche in einem Fahrzeug beschrieben. Die Vorrichtung umfasst ein Navigationssystem, welches mittels eines satellitengestützten Systems fortlaufend Positionsangaben für das Fahrzeug ermittelt und mittels einer Bilderzeugungseinheit die vom Navigationssystem ermittelten Navigationshinweise in einem Bild der Fahrzeugumgebung erzeugt. Es wird eine Zuverlässigkeit für die Positionsangabe ermittelt. Die Bilderzeugungseinheit erzeugt die Navigationshinweise zuverlässigkeitsabhängig in unterschiedlicher Darstellung.

Der Erfindung liegt die Aufgabe zugrunde, ein neuartiges Verfahren zur augmentierten Darstellung von Daten und/oder Informationen zu einer Navigation eines Fahrzeuges bei einer Geländefahrt anzugeben.

Die Aufgabe wird erfindungsgemäß gelöst durch ein Verfahren, welches die in Anspruch 1 angegebenen Merkmale aufweist.

Vorteilhafte Ausgestaltungen der Erfindung sind Gegenstand der Unteransprüche.

Ein Verfahren zur Navigation eines Fahrzeuges bei einer Geländefahrt mittels augmentierter Darstellung sieht vor, dass bei einem Befahren eines Geländes zumindest anhand von erfassten satellitengestützten GEO-Positionsdaten des Fahrzeuges eine eine Mehrzahl von Wegpunkten umfassende Wegpunktstrecke in Bezug auf einen durch ein Fahrzeug zurückgelegten Streckenabschnitt erzeugt wird. Erfindungsgemäß wird die erzeugte Wegpunktstrecke an eine mit dem Fahrzeug datentechnisch gekoppelte zentrale Rechnereinheit übermittelt und mittels der zentralen Rechnereinheit weiteren Fahrzeugen bereitgestellt. Darüber hinaus wird die ermittelte Wegpunktstrecke bei einem späteren Befahren des Geländes durch ein weiteres Fahrzeug mit aktivierter Navigation mittels aufeinanderfolgender, von dem Fahrzeug zu durchfahrender Portale, eine erfasste reale Umgebung des Fahrzeuges zumindest teilweise überlagernd, dargestellt.

Insbesondere sind die Fahrzeuge einer Fahrzeugflotte zugeordnet und datentechnisch mit der zentralen Rechnereinheit gekoppelt, so dass das Befahren des Streckenabschnittes und auf diesem eingestellte Fahrzeugeinstellungen, Fahrzeugdaten und weitere Fahrdynamikdaten in regelmäßigen zeitlichen Abständen erfasst, fahrzeugseitig gespeichert und/oder an die zentrale Rechnereinheit übermittelt werden können.

Durch Anwendung des Verfahrens werden die Wegpunkte mittels Portalen dargestellt, so dass die Darstellung von Weginformationen, insbesondere bei vergleichsweise ungenauen GEO-Positionsdaten, einem relativ robusten Konzept folgt. Mittels der Portale erfolgt die Navigation im Gelände, in dem es keine Straßen gibt. Dabei bilden die Portale eine Orientierungshilfe, welche eine stetige Darstellung einer Richtung, in welche das weitere Fahrzeug fahren muss, umfasst.

In einer Ausführung des Verfahrens wird jeder ermittelte Wegpunkt der Wegpunktstrecke mittels eines Portals dargestellt. Insbesondere basiert ein jeweiliger Wegpunkt auf erfassten GEO-Positionsdaten, welche in regelmäßigen zeitlichen und/oder räumlichen Abständen erfasst werden, so dass eine Folge von Portalen erstellt werden kann.

Erfindungsgemäß erfolgt die Darstellung der die Wegpunktstrecke markierenden einzelnen Portale oder die Darstellung der Wegpunktstrecke mittels der Portale in Abhängigkeit eines anhand einer ermittelten Häufigkeit eines Erfassens zumindest der GEO-Positionsdaten ermittelten Unsicherheitsfaktors. Das heißt, dass die einzelnen Portale der Wegpunktstrecke entsprechend des ermittelten Unsicherheitsfaktors unterschiedlich dargestellt sein können oder alle Portale der Wegpunktstrecke sind entsprechend des ermittelten Unsicherheitsfaktors dargestellt.

Erfindungsgemäß variiert eine Breite des jeweiligen Portals in Abhängigkeit des Unsicherheitsfaktors, so dass für einen Fahrer des weiteren Fahrzeuges in Abhängigkeit der Breite ersichtlich ist, dass Ungenauigkeiten vorliegen können und aus diesem Grund der Streckenabschnitt mit erhöhter Aufmerksamkeit befahren werden sollte.

Dazu sieht das Verfahren erfindungsgemäß vor, dass das jeweilige Portal bei einem ermittelten hohen Unsicherheitsfaktor breiter dargestellt wird als bei einem ermittelten niedrigen Unsicherheitsfaktor. Zumindest je mehr GEO-Positionsdaten zu dem Streckenabschnitt vorliegen, desto genauer ist die Darstellung des Streckenabschnittes mittels der Wegpunktstrecke, insbesondere mittels der Portale. Mit anderen Worten: Je öfter der Streckenabschnitt in dem Gelände befahren wird, desto mehr GEO-Positionsdaten liegen vor und desto genauer kann eine Vorgabe zur Navigation mittels der die Wegpunktstrecke kennzeichnenden Portale sein.

Dabei variiert erfindungsgemäß eine Höhe des Unsicherheitsfaktors in Abhängigkeit einer Genauigkeit zumindest der erfassten GEO-Positionsdaten. Wie oben beschrieben, ist die Vorgabe der Navigation umso genauer, je mehr GEO-Positionsdaten vorliegen, so dass bei einer Vielzahl zu dem Streckenabschnitt vorliegender GEO-Positionsdaten auch der Unsicherheitsfaktor entsprechend gering ist. Wurde dieser Streckenabschnitt nur ein einziges Mal befahren und aufgezeichnet, so ist der Unsicherheitsfaktor maximal.

In einer Ausführung variiert die Darstellung der aufeinanderfolgenden Portale in Abhängigkeit einer Änderung eines Untergrundes. Das heißt, dass sich bei einem Übergang von Stein zu Schotter oder zu Wasser eine Farbe der Portale ändern kann, wobei jeder Art von Untergrund eine Farbe zugeordnet sein kann. Beispielsweise kann Wasser mittels der Farbe Blau und Stein mittels Grau dargestellt werden, so dass die Portale entlang des Streckenabschnittes dem jeweiligen Untergrund entsprechend gekennzeichnet sind.

In einer Ausführung erfolgt die Darstellung der aufeinanderfolgenden Portale in Abhängigkeit bei einer vorhergehenden Aufzeichnung des Streckenabschnittes eingestellter Fahrzeugeinstellungen. Hierbei kann die Darstellung der Portale beispielsweise in Abhängigkeit jeweils eingestellter Fahrprogramme, einer aktivierten Differentialsperre etc. variieren.

Darüber hinaus sieht eine weitere Ausführung des Verfahrens vor, dass eine Höheninformation der Wegpunktstrecke mittels Varianz einer Transparenz des jeweiligen Portals dargestellt wird. Dabei wird eine Toleranz der Höheninformation derart verarbeitet, dass das entsprechende Portal mit seinem unteren Bereich nicht auf einem Untergrund des Streckenabschnittes aufliegt. Je ungenauer die Höheninformation ist, desto zunehmender baut sich die Transparenz von Untergrund in Richtung einer oberen Ecke dieses Portals oder der Portale auf.

Ausführungsbeispiele der Erfindung werden im Folgenden anhand von Zeichnungen näher erläutert.

Dabei zeigen:
- Fig. 1: schematisch einen Ablauf zur Ermittlung eines Unsicherheitsfaktors zur augmentierten Darstellung einer Wegpunktstrecke eines Streckenabschnittes mittels einer Anzahl von Portalen und
- Fig. 2: schematisch eine Sicht aus einem Fahrzeug auf einen vorausliegenden Streckenabschnitt, welcher teilweise mittels augmentiert dargestellter Portale überlagert ist.

Einander entsprechende Teile sind in allen Figuren mit den gleichen Bezugszeichen versehen.

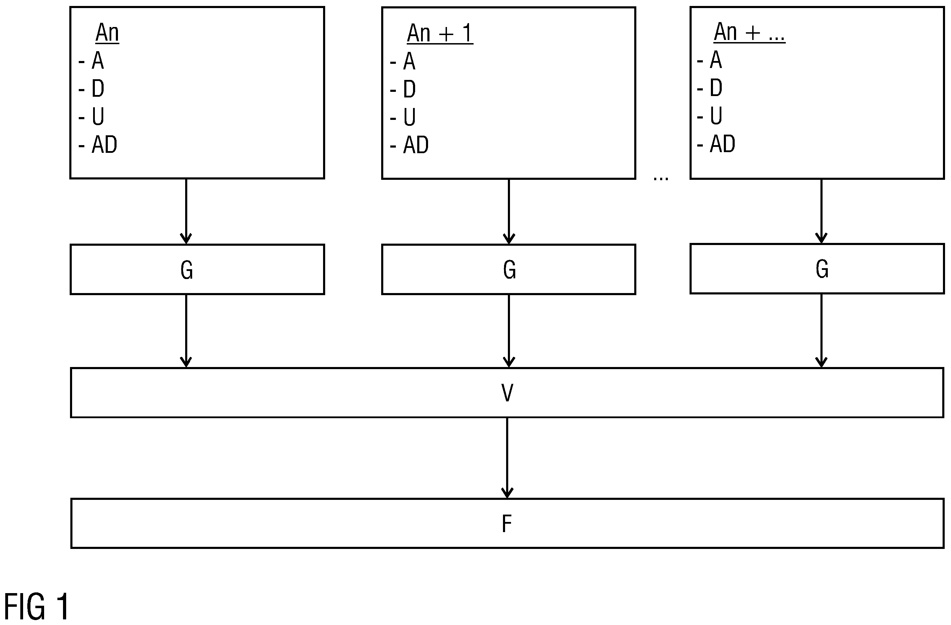

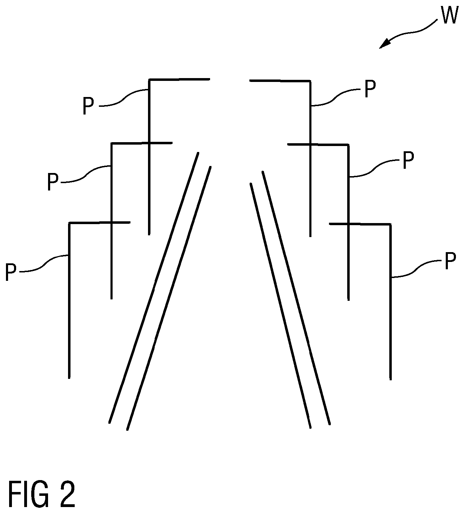

Figur 1 zeigt einen Ablauf zur Ermittlung eines Unsicherheitsfaktors F zur augmentierten Darstellung einer in Figur 2 dargestellten Wegpunktstrecke W eines Streckenabschnittes mittels einer Anzahl von Portalen P.

Figur 2 zeigt eine Sicht aus einem Fahrzeug beim Befahren eines Streckenabschnittes in einem Gelände, wobei der Streckenabschnitt mittels die Wegpunktstrecke W kennzeichnenden Portalen P augmentiert dargestellt ist.

Insbesondere wird im Folgenden eine Navigation eines Fahrzeuges bei einer Geländefahrt mittels augmentierter Darstellung des Streckenabschnittes beschrieben.

Bei einer solchen Navigation im Gelände ohne Straßen ergeben sich erhöhte Anforderungen an die Navigation und eine Darstellung von Navigationselementen. Beispielsweise existiert aufgrund fehlender Straßen und Wege eine Orientierungshilfe, so dass eine fortlaufende Darstellung einer Richtung, in welche das Fahrzeug fahren soll, erforderlich ist. Eine vergleichsweise genaue Wegpunktnavigation kann teilweise nur durch Befahren durch ein Fahrzeug, welches insbesondere einer Fahrzeugflotte angehört und datentechnisch mit einer zentralen Rechnereinheit gekoppelt ist, aufgezeichnet und mittels der zentralen Rechnereinheit weiteren Fahrzeugen der Fahrzeugflotte bereit, insbesondere zur Verfügung gestellt werden.

Darüber hinaus besteht eine Notwendigkeit, den Streckenabschnitt, insbesondere wegen oftmals im Vergleich ungenauer GEO-Positionsdaten, beispielsweise in Bezug auf Höheninformationen, wobei die GEO-Positionsdaten in regelmäßigen zeitlichen Abständen von dem jeweiligen Fahrzeug der Fahrzeugflotte empfangen werden, mit einer vorgegebenen Ungenauigkeit anzuzeigen. Dadurch wird einem Fahrer eines den Streckenabschnitt befahrenden Fahrzeuges eine Richtungsvorgabe nicht vollständig abgenommen.

Daher sieht das Verfahren vor, mittels verschiedener Metriken die Ungenauigkeit einer Wegpunktstrecke zu berücksichtigen und in einer Darstellung zur Navigation eines Fahrzeuges in einem Gelände zu verwenden. Die Darstellung zur Navigation des Fahrzeuges richtet sich hierbei auf eine augmentierte Darstellung, insbesondere mittels einer Head-up-Anzeigeeinheit oder in Form eines auf Augmented Reality basierenden Videos.

Im Allgemeinen ist ein Fahrer eines Fahrzeuges der Fahrzeugflotte im Besitz eines Smartphones, welches zum Datenaustausch drahtlos oder drahtgebunden mit dem Fahrzeug verbunden ist. Somit können Strecken, Videos, Telemetriedaten etc. gesendet und empfangen werden.

Auch ist es möglich, mittels des Smartphones eine Fahrtroute zu planen und Strecken oder Streckenabschnitte zu bearbeiten.

Die Strecken oder Streckenabschnitte etc. können mit Fahrern weiterer Fahrzeuge der Fahrzeugflotte geteilt werden, wobei hierzu auch Interessensgruppen erstellt sein können. Dazu ist es beispielsweise möglich, sogenannte Storys mit Bildern, Videos, beschreibenden Texten für eine Strecke oder einen Streckenabschnitt zu erstellen und in sozialen Netzwerken zu teilen.

In einer weiteren Ausführung kann ein mittels der zentralen Rechnereinheit angebotener Service zum Erstellen, Bearbeiten und Teilen von zum Beispiel das Fahrzeug betreffenden Informationen genutzt werden.

Insbesondere bei einer Geländefahrt mit einem Fahrzeug ist die auf Augmented Reality basierende Darstellung eine effiziente Möglichkeit, sich ohne Straßen und Wege auf einer Wegpunktstrecke zu orientieren.

Befindet sich das Fahrzeug in einem Gelände ohne Straßen und Wege, zum Beispiel in einer Wüste oder in einer anderen unwegsamen Umgebung, erfolgt eine Aufzeichnung des Streckenabschnittes ausschließlich über satellitengestützte GEO-Positionsdaten. Dabei können Toleranzen durch folgende Faktoren auftreten:
- allgemeine Toleranzen eines Satellitensystems, beispielsweise in Bezug auf eine Anzahl von Satelliten, eine Position und Lage zu einem empfangenden Fahrzeug etc.
- eine fahrzeugbezogene Empfangseinheit für Satellitensignale, also GEO-Positionsdaten, insbesondere wenn der Streckenabschnitt mittels eines Fahrzeuges aufgezeichnet wird,
- eine Frequenz einer Erzeugung von Datenpunkten, das heißt Wegpunkten, während einer Aufzeichnung,
- algorithmische Korrekturverfahren bei verhältnismäßig unzureichendem Empfang der GEO-Positionsdaten und/oder einer Verarbeitung zusätzlicher Fahrzeugdaten, beispielsweise ein Radimpuls.

Eine anhand dessen ermittelte Gesamttoleranz in Bezug auf eine anhand der GEO-Positionsdaten ermittelten Wegpunktstrecke kann 1 Meter bis 2 Meter betragen, wobei Höheninformationen auch deutlich höher abweichen können.

Bei einer Aufzeichnung eines Streckenabschnittes mittels eines Fahrzeuges wird anhand von Wegpunkten, das heißt anhand der GEO-Positionsdaten, eine Wegpunktstrecke W ermittelt, welche für ein erneutes Abfahren des Streckenabschnittes durch ein Fahrzeug der Fahrzeugflotte verwendet werden kann. Hierzu wird die Wegpunktstrecke W weiteren Fahrzeugen der Fahrzeugflotte mittels der zentralen Rechnereinheit zur Verfügung gestellt. Beispielsweise gehören diese Fahrzeuge der Fahrzeugflotte einer sogenannten Offroad Community an.

Im Fall einer Wüste als Gelände ist eine Fahrspur eines Fahrzeuges spätestens einen Tag später nicht mehr erkennbar, so dass ein nachfolgendes Fahrzeug nur mehr die Wegpunkte in Form der Wegpunktstrecke W nutzen kann, wobei die GEO-Positionsdaten, anhand derer die Wegpunkte und die Wegpunktstrecke W erzeugt werden, wie oben beschrieben, ungenau sind.

Eine Genauigkeit der Wegpunktstrecke W kann jedoch durch mehrfaches Abfahren des Streckenabschnittes und einer Verrechnung sowie Mittelung der GEO-Positionsdaten erhöht werden. Hierzu ist vorgesehen, die erhöhte Genauigkeit durch Angabe eines Unsicherheitsfaktors F anzugeben und in einem Navigationssystem zur Verwendung zu hinterlegen.

Zur Ermittlung des Unsicherheitsfaktors F, wie in Figur 1 gezeigt ist, ist vorgesehen, dass für alle Aufzeichnungen An, An+1, An+... des Streckenabschnittes ein Alter A mittels der zentralen Rechnereinheit gespeicherter GEO-Positionsdaten ermittelt wird, eine Datenquelle D, beispielsweise ein Streckenportal der zentralen Rechnereinheit, ermittelt wird, eine erwarte Ungenauigkeit U, zum Beispiel in Bezug auf eine Messmethode, ermittelt wird und ein Abgleich AD mit globalen Daten, beispielsweise Satellitenaufnahmen, durchgeführt wird.

Anschließend erfolgt eine Gewichtung G dieser Informationen, wobei darauffolgend eine mathematische Verrechnung V einer gewichteten Summe der Informationen durchgeführt wird und ein Unsicherheitsfaktor F pro Datenpunkt, also Wegpunkt, erzeugt wird.

Dann wird die Wegpunktstrecke W mit x-, y- und z-Koordinaten sowie dem Unsicherheitsfaktor F pro Wegpunkt und einem Unsicherheitsfaktor F für die Wegpunktstrecke W erzeugt.

Liegt nur eine Fahrt für diesen Streckenabschnitt vor, so ist der Ungenauigkeitsfaktor F maximal. Eine Bereitstellung eines Unsicherheitsfaktors F pro Wegpunkt oder Wegpunktstrecke W, beispielsweise über einen Serverdienst der zentralen Rechnereinheit, kann die Darstellung der Navigation zielführend verändern.

Folgende Informationen zu einem Streckenabschnitt liegen ohne Bezug zu Straßenbeziehungsweise Kartendaten nur ungenau vor:
- eine Lageposition im Raum, insbesondere eine Höheninformation durch auftretende Toleranzen bei Aufzeichnung des Streckenabschnittes als Urstrecke und
- eine Relation eines anhand der GEO-Position ermittelten Wegpunktes zu einer momentanen Position des nachfahrenden Fahrzeuges, welches ebenfalls toleranzbehaftet sein kann.

Umso ungenauer die GEO-Positionsdaten des Fahrzeuges beim Befahren des Streckenabschnittes sind, desto robuster muss die Darstellung einer Weginformation zur Navigation eines den Streckenabschnitt befahrenden weiteren Fahrzeuges sein.

Dazu ist vorgesehen, die einzelnen Wegpunkte der Wegpunktstrecke W mittels Portalen P augmentiert darzustellen, wobei das jeweilige Portal P umso breiter angezeigt wird, je höher der ermittelte Unsicherheitsfaktor F ist.

In Bezug auf die Darstellung der Höheninformation wird deren Toleranz derart verarbeitet, dass das jeweilige Portal P mit seinem unteren Bereich nicht auf dem Untergrund aufliegt. Je ungenauer die Höheninformation ist, desto transparenter wird das Portal P aus Richtung des Untergrundes hin zu oberen Eckbereichen augmentiert dargestellt.

Gemäß Figur 2 wurde ein Streckenabschnitt in einer Wüste abgefahren und aufgezeichnet. Bei einem darauffolgenden Abfahren des Streckenabschnittes wird diese als Wegpunktstrecke W mittels der Portale P augmentiert in dem Fahrzeug dargestellt.

Je öfter der Streckenabschnitt abgefahren wird, desto mehr Informationen, insbesondere GEO-Positionsdaten, liegen vor, desto genauer kann die Navigation des jeweiligen, den Streckenabschnitt befahrenden Fahrzeuges mittels der augmentiert dargestellten Portale P sein.

Dabei ist es möglich, mittels der Portale P, beispielsweise anhand deren Farbe, Breite, Dicke, Struktur, Transparenz etc. weitere Informationen an den Fahrer des den Streckenabschnitt befahrenden Fahrzeuges anzuzeigen.

Beispielsweise kann durch Änderung der Farbe der Portale P angezeigt werden, dass sich ein Untergrund des Streckenabschnittes ändert. Fährt das Fahrzeug durch Wasser, können die sich in diesem Bereich befindenden, den jeweiligen Wegpunkt kennzeichnenden Portale P blau angezeigt werden. Fährt das Fahrzeug auf einen Bereich mit Schotter und/oder Steinen zu, können diese dem Bereich zugeordneten Portale P grau und/oder braun angezeigt werden.

Auch können mittels der die Wegstrecke W kennzeichnenden Portale P Fahrzeugeinstellungen angezeigt werden, welche bei einem vorherigen Befahren des Streckenabschnittes durch ein weiteres Fahrzeug eingestellt waren. So kann zum Beispiel mittels einer Farbe angezeigt werden, welches Fahrprogramm eingestellt war und/oder ob eine Differentialsperre eingeschaltet war etc.

Darüber hinaus kann in einer Ausführung mittels entsprechender Darstellung der Portale P angezeigt werden, ob beim Aufzeichnen des Streckenabschnittes erfasste Fahrzeugdaten einer Telemetrie des Fahrzeuges bestimmte Werte, beispielsweise Minimalwerte oder Maximalwerte erreicht wurden. Beispielsweise können mittels einer Niveausensorik gemessene Federwege angezeigt werden.

Alternativ oder zusätzlich können mittels der zur Navigation des Fahrzeuges augmentiert dargestellten Portale P Geschwindigkeitsunterschiede zu einem vorherigen Befahren des Streckenabschnittes dargestellt werden. Zum Beispiel kann ein Portal P grün dargestellt werden, wenn der Streckenabschnitt von dem Fahrzeug schneller befahren wird als bei einem vorherigen Befahren.

Wenn der Fahrer des den Streckenabschnitt befahrenden Fahrzeuges eine falsche Fahrtrichtung wählt, kann ein nächstliegendes Portal P rot angezeigt werden, um den Fahrer des Fahrzeuges auf die falsche Fahrtrichtung aufmerksam zu machen.

In einer weiteren Ausführung werden die die Wegstrecke W zur Navigation kennzeichnenden Portale P vergleichsweise weniger sichtbar dargestellt, wenn diese weit entfernt zu dem Fahrzeug liegen. Es kann also auch eine Entfernung des jeweiligen Portals P zu dem Fahrzeug durch eine entsprechende Ausprägung angezeigt werden.

Wiederum alternativ oder zusätzlich kann vorgesehen sein, dass die Portale P in Abhängigkeit von einer Fahrgeschwindigkeit des Fahrzeuges ihre Ausprägung, beispielsweise Farbe, ändern. Somit kann der Fahrer auch darauf hingewiesen werden, wenn die momentane Fahrgeschwindigkeit des Fahrzeuges beim Befahren eines Bereiches des Streckenabschnittes zu hoch gewählt ist und dadurch ein Unfallrisiko für das Fahrzeug besteht.

Mittels des Verfahrens kann ein Fahrer eines Fahrzeuges, insbesondere in speziellen Navigationsfällen, insbesondere bei Geländefahrten, durch eine angepasste Darstellung der Portale P zielgerichtet informiert werden. Bei der augmentierten Darstellung der Portale P als Navigationselemente wird der ermittelte Unsicherheitsfaktors F berücksichtigt, so dass der Fahrer des den Streckenabschnitt abfahrenden Fahrzeuges darauf hingewiesen werden kann, seine Aufmerksamkeit zu erhöhen und gegebenenfalls eine momentane Fahrgeschwindigkeit zur Verringerung eines Unfallrisikos zu verringern.

## Patentansprüche

1. Verfahren zur Navigation eines Fahrzeuges bei einer Geländefahrt mittels augmentierter Darstellung, wobei bei einem Befahren eines Geländes zumindest anhand von erfassten satellitengestützten GEO-Positionsdaten des Fahrzeuges eine Mehrzahl von Wegpunkten umfassende Wegpunktstrecke (W) in Bezug auf einen durch ein Fahrzeug zurückgelegten Streckenabschnitt erzeugt wird, **dadurch gekennzeichnet, dass**
- die erzeugte Wegpunktstrecke (W) an eine mit dem Fahrzeug datentechnisch gekoppelte zentrale Rechnereinheit übermittelt und mittels der zentralen Rechnereinheit weiteren Fahrzeugen bereitgestellt wird, und
- die ermittelte Wegpunktstrecke (W) bei einem späteren Befahren des Geländes durch ein weiteres Fahrzeug mit aktivierter Navigation mittels aufeinanderfolgender, von dem Fahrzeug zu durchfahrender Portale (P), eine erfasste reale Umgebung des Fahrzeuges zumindest teilweise überlagernd, dargestellt wird, und
- die Darstellung der die Wegpunktstrecke (W) markierenden einzelnen Portale (P) oder die Darstellung der Wegpunktstrecke (W) mittels der Portale (P) in Abhängigkeit eines anhand einer ermittelten Häufigkeit eines Erfassens zumindest der GEO-Positionsdaten ermittelten Unsicherheitsfaktors (F) erfolgt, und
- eine Breite des jeweiligen Portals (P) in Abhängigkeit des ermittelten Unsicherheitsfaktors (F) variiert, und
- das jeweilige Portal (P) bei einem ermittelten hohen Unsicherheitsfaktor (F) breiter dargestellt wird als bei einem ermittelten niedrigen Unsicherheitsfaktor (F), und
- eine Höhe des Unsicherheitsfaktors (F) in Abhängigkeit einer Genauigkeit zumindest der erfassten GEO-Positionsdaten variiert.

2. Verfahren nach Anspruch 1,
**dadurch gekennzeichnet, dass**
jeder ermittelte Wegpunkt der Wegpunktstrecke (W) mittels eines Portals (P) dargestellt wird.

3. Verfahren nach einem der vorhergehenden Ansprüche,
**dadurch gekennzeichnet, dass**
die Darstellung der aufeinanderfolgenden Portale (P) in Abhängigkeit einer Änderung eines Untergrundes variiert wird.

4. Verfahren nach einem der vorhergehenden Ansprüche,
**dadurch gekennzeichnet, dass**
die Darstellung der aufeinanderfolgenden Portale (P) in Abhängigkeit bei einer vorhergehenden Aufzeichnung des Streckenabschnittes eingestellter Fahrzeugeinstellungen erfolgt.

5. Verfahren nach einem der vorhergehenden Ansprüche,
**dadurch gekennzeichnet, dass**
eine Höheninformation der Wegpunktstrecke (W) mittels Varianz einer Transparenz des jeweiligen Portals (P) dargestellt wird.

## Claims

1. Method for navigating a vehicle during off-road driving using augmented display, a waypoint route (W) comprising a plurality of waypoints being generated with respect to a route segment traveled by a vehicle, at least on the basis of acquired satellite-based GEO position data of the vehicle when driving over terrain,
**characterized in that**
- the generated waypoint route (W) is transmitted to a central computer unit linked to the vehicle for data transmission purposes and made available to other vehicles via the central computer unit, and
- during subsequent driving on the terrain by another vehicle with activated navigation, the determined waypoint route (W) is depicted by means of successive portals (P) to be driven through by the vehicle, so as to be at least partially overlaid on a detected real environment of the vehicle, and
- the individual portals (P) marking the waypoint route (W) are depicted or the waypoint route (W) is depicted by means of the portals (P) on the basis of an uncertainty factor (F) determined using a determined frequency of acquiring at least the GEO position data, and
- a width of the relevant portal (P) varies on the basis of the determined uncertainty factor (F), and
- the relevant portal (P) is depicted as wider when a high uncertainty factor (F) is determined than when a low uncertainty factor (F) is determined, and
- a level of the uncertainty factor (F) varies on the basis of the accuracy of at least the acquired GEO position data.

2. Method according to claim 1,
**characterized in that**
each determined waypoint of the waypoint route (W) is depicted by means of a portal (P).

3. Method according to either of the preceding claims,
**characterized in that**
the depiction of the successive portals (P) is varied on the basis of a change in the background.

4. Method according to any of the preceding claims,
**characterized in that**
the successive portals (P) are depicted on the basis of vehicle settings which are set during a previous recording of the route segment.

5. Method according to any of the preceding claims,
**characterized in that**
elevation information of the waypoint route (W) is depicted by means of variance of a transparency of the relevant portal (P).

## Revendications

1. Procédé pour la navigation d'un véhicule lors d'un déplacement sur un terrain au moyen d'une représentation augmentée, dans lequel, lors d'un déplacement sur un terrain, un trajet de points de cheminement (W) comprenant une pluralité de points de cheminement est généré par rapport à une section de trajet parcourue par un véhicule, au moins à l'aide de données de position GEO du véhicule détectées et basées sur des satellites,
**caractérisé en ce que**
- le trajet de points de cheminement (W) généré est transmis à une unité de calcul centrale couplée au véhicule par communication de données et est mis à la disposition d'autres véhicules au moyen de l'unité de calcul centrale, et
- le trajet de points de cheminement (W) déterminé est représenté lors d'un déplacement ultérieur sur le terrain par un autre véhicule avec la navigation activée au moyen de portails (P) successifs à traverser par le véhicule, en superposant au moins partiellement un environnement réel détecté du véhicule, et
- la représentation des portails (P) individuels marquant le trajet de points de cheminement (W) ou la représentation du trajet de points de cheminement (W) au moyen des portails (P) est effectuée en fonction d'un facteur d'incertitude (F) déterminé à l'aide d'une fréquence déterminée d'une détection d'au moins les données de position GEO, et
- une largeur du portail (P) respectif varie en fonction du facteur d'incertitude (F) déterminé, et
- le portail (P) respectif est représenté plus largement dans le cas d'un facteur d'incertitude (F) élevé déterminé que dans le cas d'un facteur d'incertitude (F) faible déterminé, et
- une valeur du facteur d'incertitude (F) varie en fonction d'une précision d'au moins les données de position GEO détectées.

2. Procédé selon la revendication 1,
**caractérisé en ce que**
chaque point de cheminement déterminé du trajet de points de cheminement (W) est représenté au moyen d'un portail (P).

3. Procédé selon l'une des revendications précédentes,
**caractérisé en ce que**
la représentation des portails (P) successifs varie en fonction d'une modification d'un sol.

4. Procédé selon l'une des revendications précédentes,
**caractérisé en ce que**
la représentation des portails (P) successifs est effectuée en fonction de réglages de véhicule définis lors d'un enregistrement précédent de la section de trajet.

5. Procédé selon l'une des revendications précédentes,
**caractérisé en ce que**
des informations de valeur du trajet de points de cheminement (W) est représentée au moyen de la variance d'une transparence du portail (P) respectif.
